# FASCICULE DE BREVET EUROPEEN

(11) **EP 4 188 780 B1**
(45) Date de publication et mention de la délivrance du brevet: **04.09.2024**
(21) Numéro de dépôt: 21752076.6
(22) Date de dépôt: 13.07.2021
(51) Int. Cl.: B62D 31/00, B60G 3/00, B60L 8/00, B60N 2/04, B62D 9/04, B60G 5/04, B60G 11/52, B60G 21/00, B60G 21/045, B60N 2/39, B62K 5/007

(54) **VÉHICULE PILOTÉ PAR SIÈGE PIVOTANT**
DURCH EINEN SCHWENKBAREN SITZ GESTEUERTES FAHRZEUG
VEHICLE STEERED BY PIVOTING SEAT

(30) Priorité: 27.07.2020 FR 2007912
(43) Date de publication de la demande: 07.06.2023
(73) Titulaire: SCAP, 26780 Allan (FR)
(72) Inventeur: RAMBAUD, Pascal, 26780 ALLAN (FR)
(74) Mandataire: Germain Maureau
(86) Numéro de dépôt international: PCT/FR2021/051303
(87) Numéro de publication internationale: WO 2022/023639

(56) Documents cités:
- WO-A1-2015/158976
- US-B1- 9 834 271
- MECANROC: "SWINCAR ELECTRIQUE", 28 October 2012 (2012-10-28), XP054975631, Retrieved from the Internet <URL:https://www.youtube.com/watch?v=O4ulkuEIDA8> [retrieved on 20141205]

## Description

L'invention concerne un véhicule.

Plus spécifiquement, l'invention concerne un véhicule à quatre roues, accessible à tous publics, pour des applications de mobilité urbaine et de proximité, avec des aptitudes de franchissement.

Il existe déjà un certain nombre de véhicules de ce type qui, cependant, ne répondent pas pleinement aux besoins des utilisateurs. En particulier, les véhicules connus présentent généralement un encombrement et/ou un poids important(s) ; ils peuvent s'avérer peu confortables ; ils offrent le plus souvent des moyens de protection du conducteur limités. Par ailleurs, les véhicules connus ne sont généralement pas prévus pour être conduits par une personne en fauteuil roulant, sauf à nécessiter des adaptations structurelles lourdes du véhicule ou l'intervention d'une ou plusieurs personnes pour installer le conducteur dans le véhicule, ce qui est généralement extrêmement malaisé. Le document XP054975631 montre un tel véhicule avec les caractéristiques du préambule de la revendication indépendante 1.

La présente invention vise à remédier à tout ou partie des inconvénients mentionnés ci-dessus, en fournissant en particulier un véhicule compact, léger, agréable d'utilisation, et accessible à un large public.

A cet effet, l'invention concerne un véhicule comprenant un châssis, un siège monté sur le châssis, ainsi qu'un train roulant droit et un train roulant gauche, chaque train roulant étant monté sur le châssis et comportant une roue avant et une roue arrière. Le véhicule définit une direction longitudinale, une direction transversale et une direction verticale, en position neutre.

Selon une définition générale de l'invention, l'invention présente les caractéristiques suivantes :
- le châssis comporte une traverse située au voisinage d'un plan transversal vertical médian du véhicule ;
- chaque train roulant comporte, pour chacune des roues avant et arrière, au moins un bras qui est agencé sensiblement parallèlement au plan moyen de la roue, chaque bras ayant une extrémité liée à l'axe de la roue et une autre extrémité montée sur une pièce de liaison de façon pivotante autour d'un axe de pivotement qui, en position neutre, est disposé sensiblement dans le plan de la roue et est vertical ou incliné vers le bas en direction de la roue, la pièce de liaison étant montée sur la traverse du châssis ;
- le siège est monté sur le châssis par un premier dispositif d'assemblage configuré pour permettre la rotation du siège par rapport au châssis autour d'un axe longitudinal ;
- le véhicule comprend quatre organes de couplage (par exemple quatre biellettes), chaque organe de couplage reliant le siège et l'un des bras lié à l'axe d'une roue, le véhicule étant dépourvu d'essieux.

De plus, le premier dispositif d'assemblage est configuré pour solliciter le siège de façon élastique vers la position neutre, et le véhicule est configuré pour que la rotation du siège par rapport au châssis entraîne, via les quatre organes de couplage, le pivotement de chaque roue autour de l'axe de pivotement, c'est-à-dire :
- d'une part le braquage de la roue par rapport à un plan longitudinal vertical ;
- et d'autre part l'inclinaison du plan moyen de la roue par rapport au plan vertical longitudinal de la roue en position neutre, vers l'intérieur du virage, si l'axe de pivotement (A) est non vertical en position neutre ;
la direction du véhicule étant commandée par la simple rotation imprimée au siège.

Grâce à l'invention, en particulier du fait que chaque train roulant est monté sur le châssis au niveau d'une traverse agencée de façon médiane selon la direction longitudinale du véhicule, et du fait de la commande de l'orientation des roues par la rotation du siège, la structure du véhicule peut être considérablement simplifiée et allégée.

Ainsi, le véhicule est dépourvu d'essieux, c'est-à-dire dépourvu d'essieu reliant les roues avant et d'essieu reliant les roues arrière. En outre, le véhicule peut être dépourvu de colonne de direction et de volant.

Il s'ensuit que le véhicule selon l'invention est très compact (par exemple ayant un encombrement de l'ordre de 1m x 1m50) et très léger (par exemple de l'ordre de 60 kg). Le véhicule peut ainsi être transporté dans une voiture de type break ou SUV (véhicule utilitaire sport).

L'absence de volant permet également d'améliorer la sécurité, puisque le conducteur n'a plus de risque de percuter le volant en cas de choc.

Un autre avantage significatif de cette structure simplifiée du véhicule est de permettre un accès aisé au siège du véhicule aux personnes à mobilité réduite et même aux handicapés lourds, car l'espace à l'avant et/ou à l'arrière du siège est dégagé.

De façon concrète :
- le châssis peut être dépourvu de longeron qui s'étendrait au moins de l'axe des roues avant à l'axe des roues arrière ;
- le châssis peut être dépourvu d'éléments de structure s'étendant dans l'espace situé à l'avant d'un plan transversal vertical tangent au bord arrière des roues avant, et/ou respectivement dans l'espace situé à l'arrière d'un plan transversal vertical tangent au bord avant des roues arrière ;
- le châssis peut être dépourvu d'élément de structure - hormis pour la liaison avec le siège - s'étendant dans l'espace situé à l'avant de la traverse, respectivement à l'arrière de la traverse, selon la direction longitudinale.

En outre, une fois installée sur le siège, une personne n'ayant plus l'usage de ses jambes peut tout à fait manoeuvrer le véhicule de l'invention en provoquant la rotation du siège par rapport au châssis.

La rotation du siège entraîne le pivotement de chaque roue autour de l'axe de pivotement. Lorsque cet axe de pivotement est vertical, le pivotement de la roue autour de l'axe de pivotement entraîne le braquage de la roue par rapport à un plan longitudinal vertical. Lorsque cet axe de pivotement est incliné (d'un angle non nul), le pivotement de la roue autour de l'axe de pivotement génère deux mouvements, à savoir : le braquage de la roue par rapport à un plan longitudinal vertical, et l'inclinaison du plan moyen de la roue par rapport au plan moyen - qui est vertical et longitudinal - de la roue en position neutre.

De façon concrète, l'axe de pivotement peut être incliné par rapport à la verticale d'un angle compris entre 0 et 60°. Prévoir un axe incliné (c'est-à-dire non vertical) permet aux composants du véhicule, et en particulier aux roues, de moins subir d'effort de torsion, leur structure pouvant ainsi être allégée.

La pièce de liaison entre une roue et la traverse du châssis peut être montée sur la traverse du châssis par un deuxième dispositif d'assemblage configuré pour permettre la rotation de la pièce de liaison par rapport à la traverse du châssis autour d'un axe transversal et solliciter la pièce de liaison de façon élastique vers la position neutre.

Une telle disposition permet d'assurer le contact des roues avec le sol quels que soient les irrégularités du terrain. Dans une certaine mesure, le deuxième dispositif d'assemblage peut assurer la fonction d'un dispositif de suspension, le véhicule pouvant ainsi être dépourvu de dispositif de suspension des roues en tant que tel.

Une telle disposition permet en outre une configuration du véhicule avec croisement de trains, d'où une adaptabilité à des terrains accidentés et une capacité de franchissement importante. L'expression « croisement de trains » signifie que, en vue latérale, les trains roulants forment une croix centrée sur la traverse. Cela correspond à la configuration de « croisement de ponts » dans un véhicule classique pourvu d'un essieu avant et d'un essieu arrière. Par exemple, l'amplitude de la rotation de la pièce de liaison par rapport à la traverse du châssis via le deuxième dispositif d'assemblage peut être de l'ordre de ± 20° autour de la position neutre, voire de ± 30°.

Selon une réalisation possible, le premier et/ou le deuxième dispositif d'assemblage comprend en outre un dispositif amortisseur.

Le premier et/ou le deuxième dispositif d'assemblage peut comprendre :
- une première barre de section carrée, creuse ;
- une deuxième barre de section carrée disposée à l'intérieur de la première barre, les barres ayant le même axe et étant tournées l'une par rapport à l'autre autour de cet axe d'un angle de 45°, les longueurs des côtés des barres étant déterminées de sorte que les sommets de la deuxième barre soient sensiblement adjacents aux côtés de la première barre, quatre logements en forme de prisme à base triangulaire étant ainsi formés entre la deuxième barre et la première barre ;
- un organe en élastomère inséré dans chacun des logements de façon à le combler sensiblement.

En pratique, le dispositif d'assemblage est conçu pour assembler deux pièces, la première barre étant solidaire d'une des pièces, et la deuxième barre solidaire de l'autre des pièces.

Dans le cas du premier dispositif d'assemblage (entre le siège et le châssis), la première barre est solidaire du siège, par exemple sous l'assise, et la deuxième barre est solidaire du châssis, par exemple au-dessus de la traverse. On peut également envisager une disposition inverse, dans laquelle la première barre est solidaire du châssis et la deuxième barre est solidaire du siège. Dans le cas du deuxième dispositif d'assemblage (entre la pièce de liaison associée à un bras lié à l'axe d'une roue, d'une part, et la traverse du châssis, d'autre part), la première barre est solidaire de la pièce de liaison, et la deuxième barre est solidaire du châssis. La deuxième barre peut typiquement être constituée de la traverse.

En variante, le premier et/ou le deuxième dispositif d'assemblage pourrait comporter deux cylindres concentriques couplés via un roulement, ainsi qu'un ressort de rappel en position neutre.

Le châssis peut en outre comporter un longeron fixé à et au-dessus de la traverse. Le longeron est de préférence entièrement logé sous le siège ; en d'autres termes, le longeron ne s'étend pas au-delà du siège, dans la direction longitudinale, ni vers l'avant ni vers l'arrière. Le longeron appartient au premier dispositif d'assemblage du siège sur le châssis. Ainsi dans la configuration décrite ci-dessus, la deuxième barre peut typiquement être constituée du longeron ; en variante, avec la disposition inverse, la première barre pourrait être constituée du longeron.

Le véhicule peut en outre comporter un dispositif de suspension associé à chacune des roues, chaque dispositif de suspension étant configuré pour permettre le pivotement de la roue concernée autour d'un axe de suspension sensiblement transversal, en position neutre. En d'autres termes, un tel véhicule comporte quatre dispositifs de suspension, la suspension de chaque roue étant indépendante. De préférence, le dispositif de suspension est situé en amont de l'axe de pivotement, depuis la traverse en direction de la roue, ce qui permet de ne pas pénaliser le fonctionnement de la direction ni l'agencement géométrique de l'axe de pivotement par rapport à la roue.

Selon une réalisation possible, le véhicule comporte deux poignées solidaires de la traverse du châssis, agencées de part et d'autre du siège et configurées pour pouvoir être saisies par un conducteur installé sur le siège. Ces poignées, qui sont de préférence situées un peu à l'avant du siège, permettent de faciliter la manoeuvre du véhicule et d'accroître la stabilité du conducteur, notamment en virage.

Le véhicule peut comporter un moteur électrique couplé à chacune des deux roues avant et/ou à chacune des deux roues arrière. On peut alors prévoir qu'une poignée comprenne un organe de commande de l'accélération des moteurs.

Le véhicule peut comporter un dispositif de freinage associé au moins à chacune des deux roues avant et/ou arrière. On peut alors prévoir qu'une poignée comprenne un organe de commande des dispositifs de freinage.

L'invention concerne également un ensemble comportant :
- d'une part un véhicule tel que précédemment décrit, et dont le siège est monté sur le châssis de façon amovible ;
- et d'autre part un fauteuil roulant qui comprend un siège pouvant être connecté de façon amovible au châssis du véhicule.

On décrit à présent, à titre d'exemples non limitatifs, plusieurs modes de réalisation possibles de l'invention, en référence aux figures annexées :
La figure 1 est une vue en perspective d'un véhicule selon l'invention, en position neutre, le véhicule comportant un châssis, deux trains roulants et un siège ;
La figure 2 est une vue en perspective d'un train roulant du véhicule ;
La figure 3 est une vue de détail du train roulant au voisinage de la liaison avec le châssis ;
La figure 4 est une vue en perspective du châssis ;
La figure 5 est une vue en perspective du siège ;
La figure 6 est une vue partielle en perspective de dessous du véhicule, montrant l'assemblage entre le siège et le châssis ;
La figure 7 est une vue de dessus du véhicule en position neutre ;
La figure 8 est une vue de face du véhicule en position neutre ;
La figure 9 est une vue en perspective du véhicule en virage sur un sol plat horizontal ;
La figure 10 est une vue de dessus du véhicule dans la position de la figure 9 ;
La figure 11 est une vue de face du véhicule dans la position de la figure 9 ;
La figure 12 est une vue en perspective du véhicule avec croisement des trains roulants ;
La figure 13 est une vue latérale du véhicule dans la position de la figure 12 ;
La figure 14 est une vue de face du véhicule dans la position de la figure 12 ;
La figure 15 est une vue en perspective d'un véhicule équipé d'un corps en position d'utilisation et d'un écran de protection ;
La figure 16 est une vue du véhicule de la figure 15 avec l'écran de protection dans une autre position ;
La figure 17 est une vue d'un véhicule équipé du corps de la figure 15, le corps étant en position escamotée ;
La figure 18 est une vue de détail du train roulant au voisinage de la liaison avec le châssis, selon une variante de réalisation de l'invention ;
La figure 19a montre en perspective une première étape de mise en place d'un fauteuil roulant sur un véhicule selon l'invention ;
La figure 19b est similaire à la figure 19a, en vue latérale ;
La figure 20a montre en perspective une deuxième étape de mise en place du fauteuil roulant sur le véhicule ;
La figure 20b est similaire à la figure 20a, en vue latérale ;
La figure 21a montre en perspective une troisième étape de mise en place du fauteuil roulant sur le véhicule ;
La figure 21b est similaire à la figure 21a, en vue latérale ;
La figure 22 est une vue en perspective d'un véhicule équipé d'un support, le véhicule étant en position de stationnement en appui sur le support.

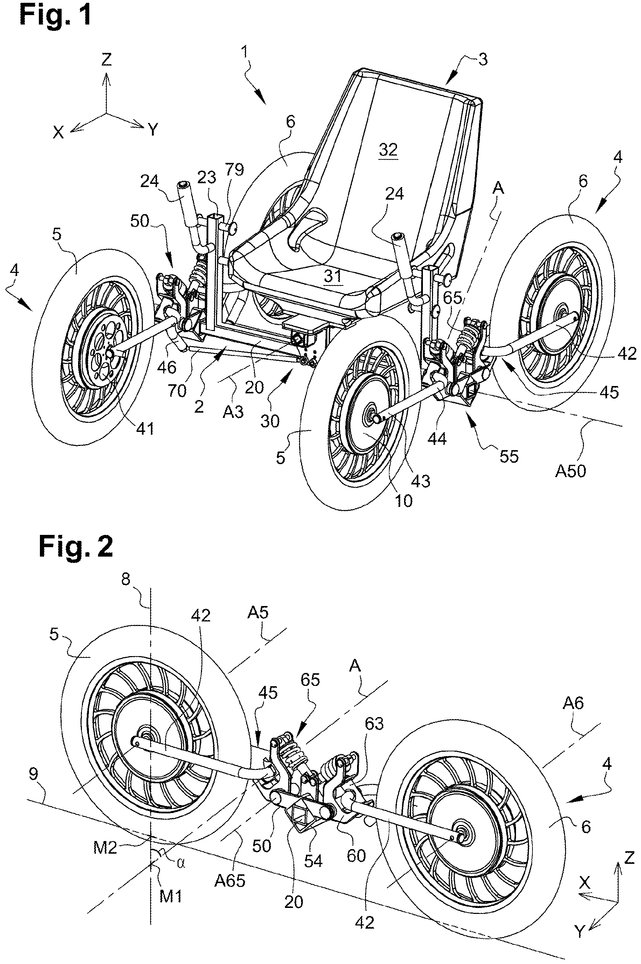

La figure 1 représente un mode de réalisation d'un véhicule 1 qui comprend pour l'essentiel un châssis 2, un siège 3 monté sur le châssis 2, ainsi que deux trains roulants 4 (à savoir un train roulant droit et un train roulant gauche). Chaque train roulant 4 est monté sur le châssis 2 et comporte une roue avant 5 et une roue arrière 6.

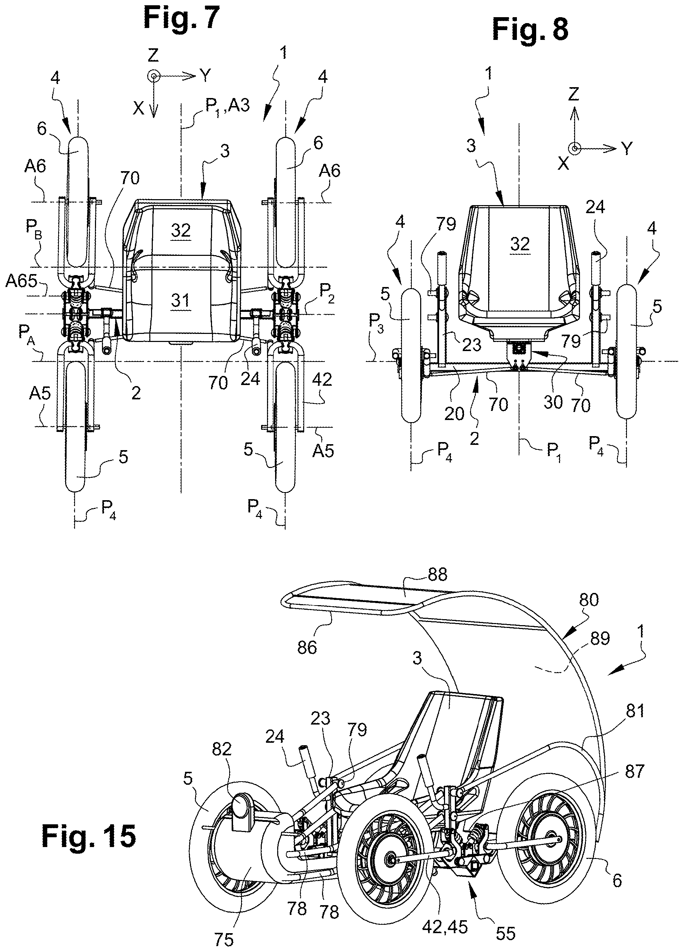

Sur les figures 1, 7et 8, le véhicule 1 est représenté en position neutre, c'est-à-dire lorsqu'il repose sur une surface plate et horizontale et qu'il est à l'arrêt, les roues 5, 6 et le siège 3 étant orientés pour que le véhicule 1 puisse se déplacer selon une ligne droite.

Dans un premier temps, le véhicule 1 va être décrit en référence à cette position neutre.

On définit la direction longitudinale X comme la direction longitudinale générale du véhicule 1, qui est donc sensiblement horizontale en position neutre. Les termes « avant », « frontal » et « arrière » seront utilisés en référence à la direction X et à un déplacement du véhicule 1 en marche avant. On définit la direction transversale Y comme la direction orthogonale à X et qui est sensiblement horizontale en position neutre. Les termes « gauche », « droite », « latéral », « transversal » et « largeur » seront employés en référence à la direction Y. Le terme « intérieur » est défini par rapport à un virage dans lequel est engagé le véhicule 1. Enfin, on définit la direction Z comme la direction orthogonale à X et Y, qui est donc sensiblement verticale en position neutre. Les termes « hauteur », « haut » et « bas » seront employés en référence à la direction Z.

Le véhicule 1 présente un plan de symétrie longitudinal médian P1 parallèle à (X, Z), et un plan transversal médian P2, comme on le voit en particulier sur la figure 7.

Le châssis 2 comprend un ensemble d'éléments de structure, par exemple de type profilés, sur lesquels tous les autres composants du véhicule 1 sont attachés, et qui servent de support à ces autres composants.

Le châssis 2 comprend une traverse 20 qui est située au voisinage, ou inclue dans, le plan transversal médian P2 du véhicule 1. La traverse s'étend dans la direction Y, et définit un plan moyen horizontal P3 représenté sur la figure 8.

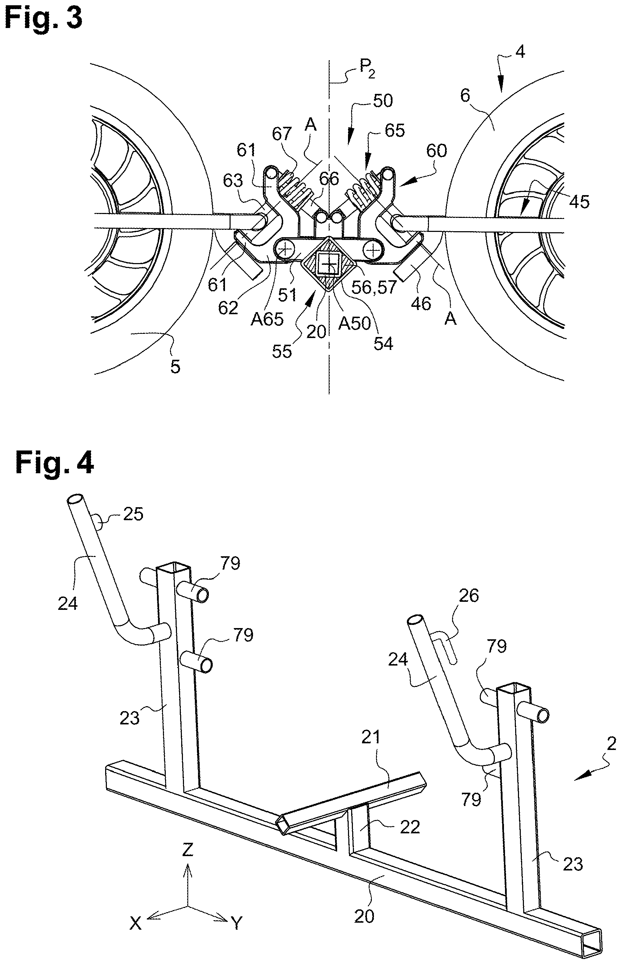

Comme illustré sur la figure 4, le châssis 2 peut également comporter un longeron 21 qui est fixé à la traverse 20, au-dessus de celle-ci, par exemple via une poutre verticale 22 de faible hauteur. Le longeron 21 permet de monter le siège 3 sur le châssis 2, comme cela sera décrit plus loin. De préférence, comme on le voit sur la figure 7, le longeron 21 est entièrement logé sous le siège 3, c'est-à-dire ne dépasse pas longitudinalement du siège 3, ni vers l'avant ni vers l'arrière.

En outre, le châssis 2 peut comprendre deux montants 23 solidaires de la traverse 20, agencés de part et d'autre du siège 3 dans la direction transversale Y. Les montants 23 sont de préférence sensiblement verticaux.

La traverse 20, la poutre verticale 22, le longeron 21 et les montants 23 peuvent être réalisés en tubes métalliques de section carrée. La traverse 20 et les montants 23 sont par exemple agencés de sorte que deux faces du tube de section carrée soient orthogonales à la direction X ; le longeron 21 est par exemple agencé de sorte que deux arêtes opposées du tube de section carrée soient situées dans un même plan horizontal.

La traverse 20, la poutre verticale 22, le longeron 21 et les montants 23 font partie de ou constituent l'ensemble des éléments de structure du châssis 2.

Sur la figure 7 sont représentés : le plan P_{A} transversal vertical qui est tangent au bord arrière des roues avant 5, et le plan P_{B} transversal vertical tangent qui est au bord avant des roues arrière 6. Selon l'invention, en position neutre, le châssis 2 peut être dépourvu d'élément de structure s'étendant dans l'espace situé à l'avant du plan P_{A}, et/ou dans l'espace situé à l'arrière du plan P_{B}.

De façon plus générale, l'espace situé à l'avant du plan P_{A} et entre les roues avant 5 peut être sensiblement dépourvu de tout élément, de façon à dégager complètement l'accès frontal au siège 3. L'espace situé à l'arrière du plan P_{B} et entre les roues arrière 6, peut être sensiblement dépourvu de tout élément - à l'exception du siège 3, de façon à dégager complètement l'accès au véhicule 1 depuis l'arrière.

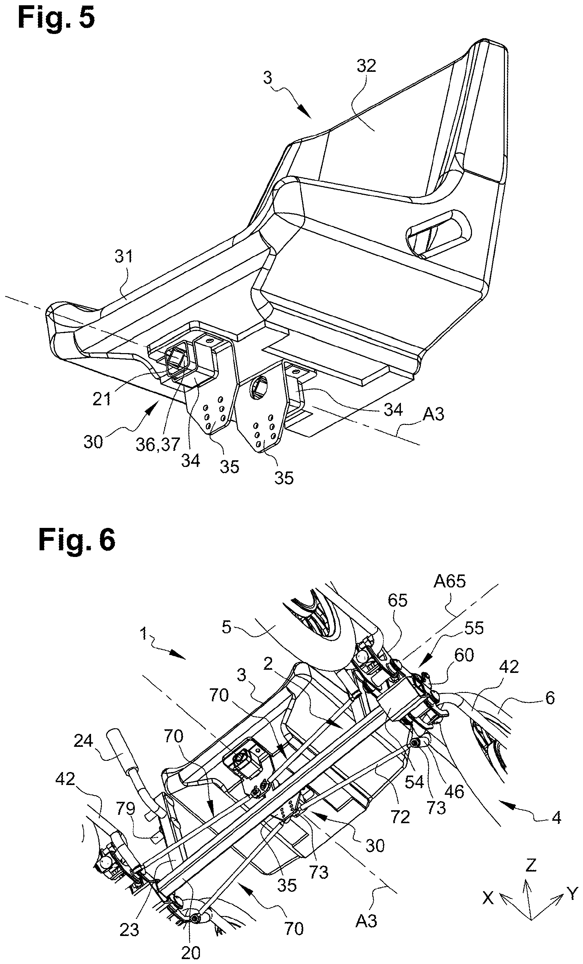

Le siège 3 comporte une assise 31 sensiblement horizontale et un dossier 32 sensiblement vertical ou légèrement incliné vers l'arrière. Le siège 3 est monté sur le châssis 2 par un premier dispositif d'assemblage 30 visible notamment sur les figures 5 et 6. Le premier dispositif d'assemblage 30 est configuré pour permettre la rotation du siège 3 par rapport au châssis 2 autour d'un axe A3 longitudinal inclus dans le plan P1, et pour solliciter le siège 3 de façon élastique vers la position neutre.

Selon une réalisation possible illustrée sur les figures, le premier dispositif d'assemblage 30 comprend une barre 34 de section carrée, creuse, fixée sous l'assise 31 du siège 3 de sorte que son axe soit inclus dans le plan P1. La barre 34 peut être fixée sur une platine 35 elle-même fixée sous l'assise 31. On peut avoir deux platines 35 portant chacune deux tronçons de barre 34 alignés, espacés l'un de l'autre le long de la direction longitudinale X. La barre 34 est ici agencée de sorte que deux faces de la barre 34 soient horizontales.

Le longeron 21 est disposé à l'intérieur de la barre 34, coaxialement. Avec l'agencement précédemment décrit, le longeron 21 est ainsi tourné par rapport à la barre 34 autour de l'axe A3 d'un angle de 45° (en position neutre). De plus, la barre 34 et le longeron 21 ont leurs côtés dimensionnés de sorte que les sommets du longeron 21 soient sensiblement adjacents aux côtés de la barre 34. Quatre logements 36 en forme de prisme à base triangulaire sont ainsi formés entre le longeron 21 et la barre 34. Un organe en élastomère 37 est inséré dans chacun des logements 36, de façon à le combler sensiblement. L'organe en élastomère 37 permet d'assurer le retour élastique en position neutre accompagné d'un amorti.

Un tel premier dispositif d'assemblage 30 constitue ainsi un moyen articulé élastique et amorti. En variante, d'autres dispositifs assurant les mêmes fonctions pourraient être mis en oeuvre, comme par exemple un ensemble comprenant un ressort de torsion et un amortisseur.

On décrit à présent un train roulant 4, étant précisé que le train roulant gauche et le train roulant droit sont sensiblement identiques mais symétriques par rapport au plan P1.

En position neutre, le train roulant 4 définit un plan moyen P4 qui est vertical et longitudinal (soit parallèle à P1) et qui est également le plan moyen de la roue avant 5 et de la roue arrière 6. Le train roulant 4 est de plus de structure symétrique par rapport au plan P2 - à l'exception du sens de rotation des roues 5, 6.

Les roues avant 5 présentent un axe A5, et les roues arrière 6 présentent un axe A6. En position neutre, les axes A5 des deux roues avant 5 sont confondus, et les axes A6 des deux roues arrière 6 sont confondus.

Le véhicule 1 peut comporter un moteur électrique 10 couplé à chacune des deux roues avant 5 et/ou à chacune des deux roues arrière 6, et relié à des batteries amovibles rechargeables. Le moteur 10 peut être logé dans le moyeu de la roue concernée. Un tel agencement est avantageux car il ne requiert aucune transmission pour être compatible avec le mouvement des roues dans leurs trois axes de liberté de mouvement (braquage - ou direction - et inclinaison, suspension, et croisement de trains). Ces mouvements seront détaillés plus loin.

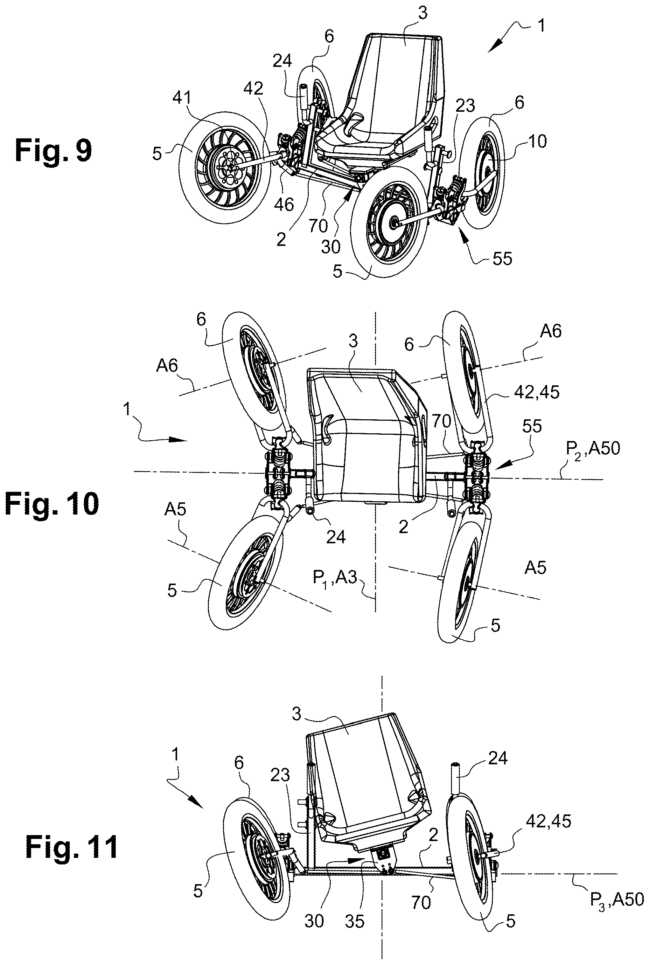

Par ailleurs, le véhicule 1 peut comporter un dispositif de freinage associé au moins à chacune des deux roues avant 5 et/ou arrière 6, et par exemple à chacune des quatre roues. Il peut s'agir d'un disque de frein 41, comme on le voit par exemple sur la figure 9.

Le train roulant 4 comporte, pour chacune des roues avant 5 et arrière 6, au moins un bras 42 qui est agencé sensiblement parallèlement au plan moyen de la roue. Plus précisément, en position neutre, le bras 42 s'étend sensiblement longitudinalement, en étant par exemple situé légèrement au-dessus du moyen horizontal P3 de la traverse 20. Le bras 42 présente une extrémité 43 liée à l'axe de la roue et une autre extrémité 44 montée sur une pièce de liaison 50 elle-même montée sur la traverse 20 du châssis 2.

En pratique, chaque roue 5, 6 peut être associée à une fourche 45 comportant deux bras 42 parallèles disposés de part et d'autre de la roue et reliés à leurs extrémités 44 par une portion coudée.

La pièce de liaison 50 peut être disposée symétriquement entre la roue avant 5 et la roue arrière 6, et montée à une extrémité de la traverse 20.

L'extrémité 44 du bras 42 est montée sur la pièce de liaison 50 de façon pivotante autour d'un axe de pivotement A. Comme on le voit notamment sur les figures 2 et 3, en position neutre, l'axe de pivotement A est disposé sensiblement dans le plan de la roue 5. Dans la réalisation représentée, l'axe de pivotement A est incliné vers le bas en direction de la roue 5. De plus, avantageusement, l'inclinaison de l'axe de pivotement A peut être telle que le point d'intersection M1 entre ledit axe de pivotement A et la perpendiculaire 8 au sol 9 passant par le point de contact M2 entre la roue et le sol 9 soit situé au niveau dudit point de contact M2 ou plus bas. Un tel agencement permet d'éviter les réactions dans la direction et de favoriser le rappel en position neutre. A titre d'exemple, et comme illustré sur la figure 2, l'axe de pivotement A est incliné par rapport à la verticale d'un angle α qui peut être voisin de 45°.

Une disposition verticale de l'axe de pivotement A peut également être envisagée.

Selon une réalisation possible, comme cela est visible sur la figure 3, la pièce de liaison 50 comprend une base 51 qui est montée sur le châssis 2. Plus précisément, la base 51 peut être montée sur la traverse 20 du châssis 2 par un deuxième dispositif d'assemblage 55 configuré pour permettre la rotation de la base 51 par rapport à la traverse 20 autour d'un axe A50 transversal et pour solliciter la base 51 de façon élastique vers la position neutre.

Par exemple, le deuxième dispositif d'assemblage 55 comprend une barre 54 de section carrée, creuse. La barre 54 est fixée à la base 51 de sorte que son axe soit orthogonal au plan moyen P4 du train roulant 4, c'est-à-dire que son axe soit transversal en position neutre. La barre 54 est agencée de sorte que deux arêtes opposées de cette barre soient situées dans un même plan horizontal.

La traverse 20 du châssis 2 est disposée à l'intérieur de la barre 54, coaxialement. La traverse 20 est ainsi tournée par rapport à la barre 54, autour de l'axe de la traverse 20, c'est-à-dire de l'axe A50, d'un angle de 45° (en position neutre). De plus, la barre 54 et la traverse 20 ont leurs côtés dimensionnés de sorte que les sommets de la traverse 20 soient sensiblement adjacents aux côtés de la barre 54. Quatre logements 56 en forme de prisme à base triangulaire sont ainsi formés entre la traverse 20 et la barre 54. Un organe en élastomère 57 est inséré dans chacun des logements 56, de façon à le combler sensiblement. L'organe en élastomère 57 permet d'assurer le retour élastique en position neutre accompagné d'un amorti.

Un tel premier dispositif d'assemblage 55 constitue ainsi un moyen articulé élastique et amorti. D'autres moyens articulés élastiques et amortis peuvent être mis en oeuvre, comme par exemple un ensemble comprenant un ressort de torsion et un amortisseur.

Par ailleurs, selon une réalisation non limitative, deux étriers 60 sont montés sur la base 51. Chaque étrier 60 comporte deux branches 61 reliées par une portion de liaison 62 elle-même montée sur la base 51 de façon pivotante autour d'un axe A65 qui est orthogonal au plan moyen P4 du train roulant 4, c'est-à-dire qui est transversal en position neutre.

La pièce de liaison 50 est symétrique par rapport au plan transversal médian P2 du véhicule 1. En particulier, les étriers 60 sont disposés symétriquement par rapport à P2 et sont notamment ouverts chacun en direction de la roue la plus proche.

L'axe de pivotement A peut être formé par un mécanisme de pivot 63 agencé entre les deux branches 61 de l'étrier 60 ; il peut s'agir d'un cylindre extérieur sur lequel est fixé la fourche 45 et pivotant autour d'un cylindre intérieur concentrique fixé sur les branches 61. Les branches 61 de chaque étrier 60 peuvent être orthogonales à l'axe de pivotement A.

L'axe A65 forme un axe de suspension permettant le pivotement de la roue concernée, via un dispositif de suspension 65. Dans la réalisation des figures 1 à 17, le dispositif de suspension 65 comporte d'une part un amortisseur 66 dont une extrémité est montée à l'extrémité d'une branche 61 de l'étrier 60, et dont l'autre extrémité est montée sur la base 51, et d'autre part un ressort 67 agencé autour de l'amortisseur 66.

Le véhicule 1 comprend en outre quatre organes de couplage 70 permettant au conducteur de commander les roues via l'inclinaison du siège 3. Chaque organe de couplage 70 relie le siège 3 et un bras 42 lié à l'axe de l'une des roues 5, 6.

Plus spécifiquement, un organe de couplage 70 peut être une biellette comportant une tige rigide 72 munie d'une rotule 73 à chaque extrémité. Une rotule 73 est liée au siège 3, par exemple à l'une des platines 35, et l'autre rotule 73 est liée à un bras 42, par exemple à une jambe 46 solidaire dudit bras 42 et s'étendant vers le bas et vers le plan P2. Quatre organes de couplage 70 étant prévus, le véhicule 1 possède donc quatre roues directrices. Comme on le voit sur les figures 6 et 7, les quatre organes de couplage 70 sont disposés sensiblement symétriquement par rapport aux plans P1 et P2.

Ainsi, lorsque le conducteur du véhicule 1 agit sur le siège 3 pour le faire pivoter autour de l'axe A3 par rapport au châssis 2, les organes de couplage 70 exercent une force de traction ou de poussée sur les roues 5, 6 - selon la roue concernée et le sens de rotation du siège 3 - ce qui entraîne le pivotement de chaque roue autour de son axe de pivotement respectif A.

Afin de faciliter la mise en rotation du siège 3, le véhicule 1 peut être pourvu de deux poignées 24 que le conducteur peut saisir et sur lesquelles il peut prendre appui. Les poignées 24 sont solidaires du châssis 2 et agencées de part et d'autre du siège 3, de préférence au voisinage de l'extrémité avant du siège 3. Par exemple, les poignées 24 peuvent être fixées chacune sur un montant 23.

En outre, l'une des poignées 24 peut comporter un organe de commande de l'accélération des moteurs 10, tel qu'une gâchette 25, et une poignée 24 - de préférence l'autre poignée - peut comporter un organe de commande des dispositifs de freinage 41, tel qu'un levier 26.

Différentes positions d'ancrage des organes de couplage 70 (biellettes) permettent de générer des géométries favorables à la conduite, à la stabilité et à la précision du véhicule 1 :
- un angle de braquage plus important des roues intérieures pour éviter un phénomène de ripage (épure de Jeantaud ou Ackerman) ;
- un angle de braquage différent des roues avant 5 et arrière 6 ;
- un angle d'inclinaison différent du siège 3 et des roues 5,6.

Ainsi, en partant d'une configuration en position neutre (figures 1, 7 et 8), le conducteur peut imprimer au siège 3 un mouvement de rotation par rapport au châssis 2 pour faire tourner le véhicule 1.

Les figures 9 à 11 illustrent le véhicule 1 lors d'un virage à droite, sur sol horizontal. Le conducteur a fait tourner le siège 3 par rapport à la traverse 20, autour de l'axe A3, vers la droite. Ceci a engendré, via les organes de couplage 70, le pivotement de chaque roue autour de son axe de pivotement respectif A. Et, lorsque l'axe de pivotement A est incliné (et non vertical), le pivotement d'une roue génère :
- d'une part le braquage de la roue par rapport à un plan longitudinal vertical;
- et d'autre part l'inclinaison du plan moyen de la roue par rapport au plan vertical longitudinal P4 de la roue en position neutre, vers l'intérieur du virage.

Les plans moyens des roues avant 5 et arrière 6 d'un train roulant 4 ne définissent plus un même plan moyen.

L'inclinaison en virage des roues 5, 6 et du siège 3 permet d'améliorer la stabilité et de réduire les contraintes dans les trains roulants 4 donc de réduire le poids. Cette inclinaison permet également au conducteur de ne pas ou peu subir la force centrifuge, et d'éprouver une sensation de conduite très naturelle évoquant celle des sports de glisse tels que le ski ou le surf.

La commande de la direction du véhicule 1 par la simple rotation imprimée au siège 3 est intuitive et directe. Elle permet l'utilisation du véhicule 1 par des personnes à mobilité réduite ayant perdu l'usage des jambes et/ou d'un bras.

Une fois que le véhicule 1 est sorti du virage, le siège 3 revient en position neutre sous l'action de rappel élastique du premier dispositif d'assemblage 30, et les roues 5, 6 retrouvent donc également leur position neutre via l'action des organes de couplage 70.

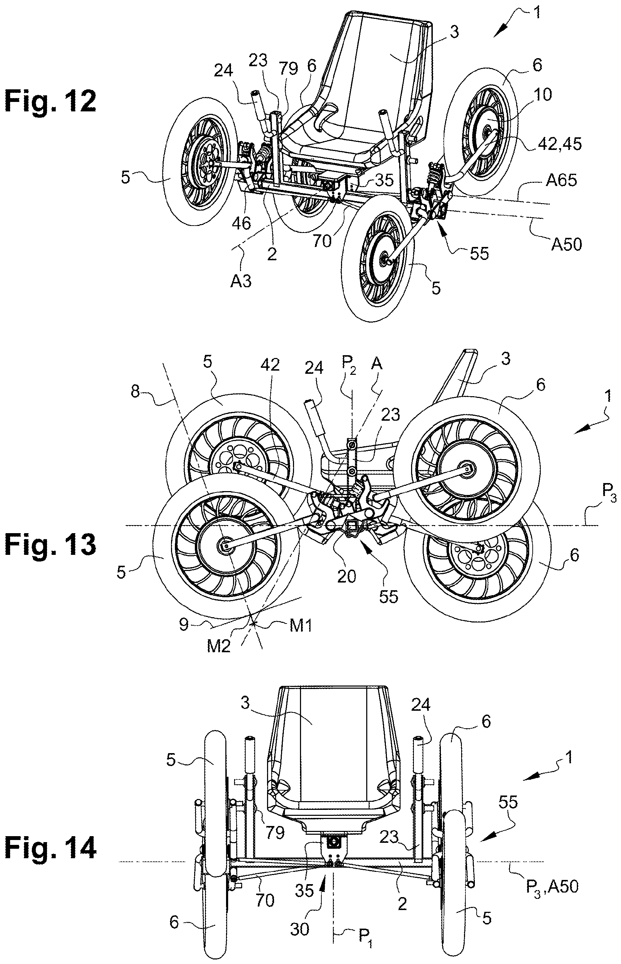

Par ailleurs, la liaison entre les trains roulants 4 et le châssis 2 au moyen du deuxième dispositif d'assemblage 55 articulé, élastique et amorti permet au véhicule 1 d'adopter une configuration avec croisement de trains autour de la traverse 20 qui les relie, comme illustré sur les figures 12 à 14. Ceci confère au véhicule 1 une capacité de franchissement importante, y compris avec d'importants accidents de terrain. Lorsque le véhicule circule à nouveau sur un terrain horizontal, en ligne droite, les roues 5, 6 retrouvent également leur position neutre sous l'action de rappel élastique du deuxième dispositif d'assemblage 55.

Par ailleurs, le véhicule 1 selon l'invention peut être équipé d'un corps 75 et/ou d'un écran de protection 80, comme illustré sur la figure 15.

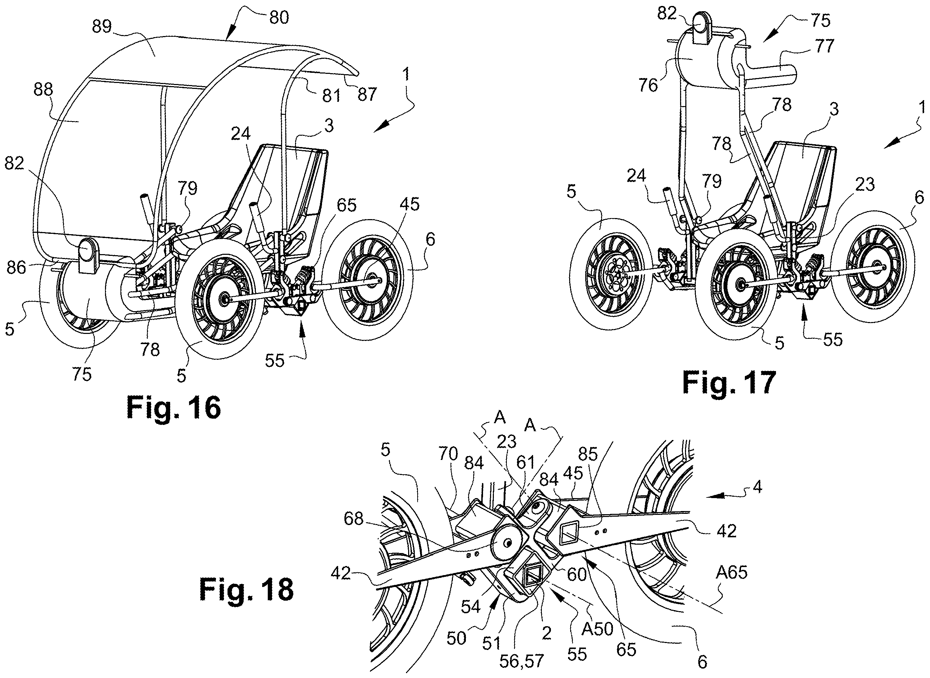

Le corps 75 possède une paroi frontale 76, qui peut être courbée avec la concavité dirigée vers l'arrière, et une paroi horizontale 77. Le corps 75 est monté sur le châssis 2 de façon mobile entre :
- une première position dite d'utilisation (figure 15), dans laquelle le corps 75 est disposé à l'avant du siège 3 et entre les roues avant 5, de sorte que la paroi frontale 76 forme un pare-chocs et que la paroi horizontale 77 forme un repose-pieds ;
- et une deuxième position dite escamotée (figure 17), dans laquelle le corps est disposé au-dessus du siège 3, de façon à libérer l'accès frontal au siège 3 et ainsi à faciliter l'installation du conducteur.

A cet effet, le corps 75 peut comprendre deux bras 78 latéraux articulés chacun à un montant 23 solidaire de la traverse 20. Selon une réalisation, le corps 75 comprend, de chaque côté, une paire de bras 78 latéraux. Les bras 78 d'une paire sont articulés d'une part en des points différents du corps 75 et d'autre part sur des attaches 79 situées à des hauteurs différentes sur le montant 23 correspondant. Le corps 75 subit ainsi globalement une rotation autour d'un axe transversal entre sa position d'utilisation et sa position escamotée, pour que, dans cette position escamotée, le corps 75 soit situé suffisamment en hauteur pour permettre une installation facile du conducteur sur le siège 3. Plus précisément, on a un mécanisme de type parallélogramme déformable permettant de conserver l'orientation du corps 75 entre sa position d'utilisation et sa position escamotée.

Différents agencements des attaches 79 sur les montants 23 peuvent être envisagés. Ainsi, les attaches 79 peuvent être agencées sur les côtés des montants 23 dirigés à l'opposé du siège 3 (comme sur la figure 8) ; les attaches 79 peuvent être agencées sur les côtés des montants 23 dirigés vers le siège 3 et, optionnellement, on peut prévoir une attache 79 additionnelle sur les côtés des montants 23 dirigés à l'opposé du siège 3 (comme sur la figure 4). Certaines attaches 79 peuvent être dédiées au montage de l'écran 80 et d'autres au montage du corps 75 ; en variante, une même attache 79 peut servir à la fois au montage de l'écran 80 et du corps 75.

Une fois installé sur le siège 3, le conducteur peut déplacer le corps 75 jusqu'en position d'utilisation.

En cas de choc frontal, le corps 75 va exercer, via les bras 78, une poussée vers l'arrière sur les attaches 79 situées en haut des montants 23 et occasionner par conséquent une certaine rotation de la traverse 20 à l'intérieur de la barre 54 du deuxième dispositif d'assemblage 55. Les organes en élastomère 57 vont alors permettre d'absorber une partie de l'énergie cinétique. De plus, l'assise 31 du siège 3 va donc se trouver basculée vers l'arrière, ce qui réduit le risque de glissement voire d'éjection du conducteur vers l'avant, même s'il n'est pas attaché.

L'écran de protection 80 peut se présenter sous la forme d'une paroi courbée, de largeur voisine de celle du véhicule 1, s'étendant sur une portion angulaire de 100 à 120° environ. L'écran de protection 80 est monté sur le châssis 2 de façon mobile entre :
- une première position (figure 15), dans laquelle l'écran 80 est disposé à l'arrière et au-dessus du siège 3 et forme une protection contre le soleil ou la pluie, cette première position permettant en outre à une personne de s'installer sur le siège 3 ;
- et une deuxième position (figure 16), dans laquelle l'écran 80 est disposé à l'avant et au-dessus du siège 3 et forme un pare-brise.

A cet effet, l'écran de protection 80 peut comprendre deux bras 81 latéraux articulés chacun à un montant 23 solidaire de la traverse 20. Par exemple, chaque bras 81 peut être monté pivotant sur une attache 79 du montant 23. L'écran de protection 80 est ainsi animé d'un mouvement de pivotement autour de l'axe transversal définie par les attaches 79. L'écran de protection 80 peut ainsi être déplacé sensiblement selon une rotation autour d'un axe transversal entre ses première et deuxième positions, et occuper un certain nombre de positions intermédiaires selon les besoins.

Notamment, une position intermédiaire particulièrement intéressante est celle où l'écran 80 a ses bords avant 86 et arrière 87 sensiblement dans un même plan horizontal. L'écran 80 peut alors former un toit abritant efficacement le conducteur du véhicule 1.

L'écran de protection 80 peut être équipé d'un capteur solaire capable de convertir une partie du rayonnement solaire en énergie électrique, et ainsi de recharger les batteries du véhicule 1. Les batteries peuvent être chargées via le capteur solaire lorsque le véhicule 1 roule. Il est également possible de recharger les batteries lorsque le véhicule 1 est stationné, de façon à pouvoir repartir avec des batteries pleines - selon l'ensoleillement et le temps d'arrêt du véhicule - augmentant in fine considérablement l'autonomie et diminuant la consommation du véhicule.

Comme illustré sur les figures 15 et 16, l'écran 80 peut comporter une partie avant 88 sensiblement transparente, garantissant la visibilité pour le conducteur, et une partie arrière 89 recevant le capteur solaire, donc opaque.

Avantageusement l'inclinaison du capteur solaire - c'est-à-dire la position de l'écran 80 entre ses première et deuxième positions - peut être réglée précisément, à l'arrêt du véhicule 1, selon la hauteur du soleil, de façon à optimiser la récupération d'énergie solaire et donc l'efficacité.

Un organe d'assemblage 82 peut être prévu sur le corps 75 pour assurer le maintien temporaire de l'écran de protection 80 dans la deuxième position, lorsque le corps 75 est dans sa position d'utilisation, comme on le voit sur la figure 16.

L'architecture simplifiée du véhicule permet de réduire le nombre de pièces fonctionnelles, le poids et le coût de fabrication, et également d'augmenter la robustesse et la fiabilité.

En particulier, l'absence d'essieux, de colonne de direction et de volant permet une grande compacité du véhicule et supprime le risque de percuter le volant en cas de choc frontal. Ceci permet de plus un accès frontal au siège 3, comme cela est bien visible sur la figure 1, pour un véhicule 1 dépourvu de corps 75, et sur la figure 17 pour un véhicule 1 incluant un corps 75 placé en position escamotée. Un tel accès frontal est particulièrement intéressant pour une personnes en fauteuil roulant, dont l'approche et le transfert vers le siège 3 sont ainsi considérablement facilités.

La figure 18 illustre une variante de réalisation du dispositif de suspension 65 des roues 5, 6. Le dispositif de suspension 65 présente ici une structure similaire à celle du deuxième dispositif d'assemblage 55 décrit notamment en référence à la figure 3.

Ainsi, une barre 84 de section carrée, creuse, est montée sur la pièce de liaison 50, par exemple entre les deux branches 61 d'un étrier 60 qui n'est pas articulé à la base 51 mais est solidaire de celle-ci. L'étrier 60 et la base 51 forment par exemple une même pièce usinée ou mécanosoudée. La barre 84 est apte à tourner par rapport à l'étrier 60 autour de l'axe de pivotement A, par exemple sur une amplitude pouvant atteindre ± 30°.

L'extrémité 44 du bras 42, ou de chacun des deux bras 42 de la fourche 45 liée à la roue 5, 6, est pourvue d'une barre 85 de section carrée qui est engagée dans la barre 84, coaxialement et en étant tournée de 45° autour de l'axe commun par rapport à la barre 84 (en position neutre). L'axe commun forme l'axe de suspension A65, orienté transversalement en position neutre. Des organes en élastomère (non représentés) sont intercalés entre la barre 84 et la barre 85. Le dispositif de suspension 65 forme donc un moyen articulé élastique et amorti.

Dans la réalisation de la figure 18, les axes de pivotement A et de suspension A65 sont sécants.

Cette variante de réalisation présente une grande homogénéité des moyens mis en oeuvre pour toutes les articulations fonctionnelles : direction (ou braquage) et inclinaison autour de l'axe A ; croisement de trains autour de l'axe A50 qui est également l'axe de la traverse 2 ; suspension autour de l'axe A65.

De préférence, un cache tel qu'une rondelle 68 est prévu pour obturer l'extrémité des barres 84, 85. Il est à noter que, sur la figure 18, le cache n'est pas représenté en partie droite, pour que les composants soient bien visibles. On peut prévoir un cache 68 de chaque côté de la barre 84, les caches 68 étant reliés par une tige filetée engagée dans la barre 85 et serrés l'un vers l'autre, de sorte à assurer un maintien latéral des extrémités 44 des bras 42 emboîtées dans les barres 84.

Un autre avantage significatif de l'invention est de permettre l'accès au véhicule 1 à une personne handicapée sans que celle-ci n'ait besoin de quitter son fauteuil roulant pour s'installer sur le siège 3. Cet accès s'effectue typiquement par l'arrière du véhicule 1, dont l'accès est dégagé notamment du fait de l'absence d'essieu arrière.

A cet effet, le siège 3 est monté sur le châssis 2 de façon amovible, et le châssis 2 comporte des premiers moyens (non représentés) de connexion amovible d'un siège de fauteuil roulant 90.

En outre, le fauteuil roulant 90 comprend un siège 91 qui comporte une assise 92 pourvue de seconds moyens 93 de connexion amovible au châssis 2 du véhicule 1. Le siège 91 comporte de préférence une paroi 94 qui, en position d'utilisation, est disposée verticalement et s'étend vers le bas depuis le bord avant de l'assise 92, à l'arrière des jambes de l'utilisateur. La paroi 94 peut être relevable à l'horizontale par pivotement par rapport au bord avant de l'assise 92. Le siège peut également comporter un dossier 95.

Le fauteuil roulant 90 comprend de plus deux roues arrière 96 et deux roulettes avant 97. Les roulettes avant 97 sont disposées sous l'assise 92 et ont un diamètre inférieur à la distance entre le sol 9 et la traverse 20 du véhicule 1. Les roues arrière 96 et les roulettes avant 97 sont liées à l'assise par un système de liaison 98.

En position d'utilisation du fauteuil 90 seul, l'assise 92 du fauteuil 90 est située à une hauteur plus importante que celle de la traverse 20 du châssis 2 et possède une largeur inférieure à l'écartement entre les trains roulants 4.

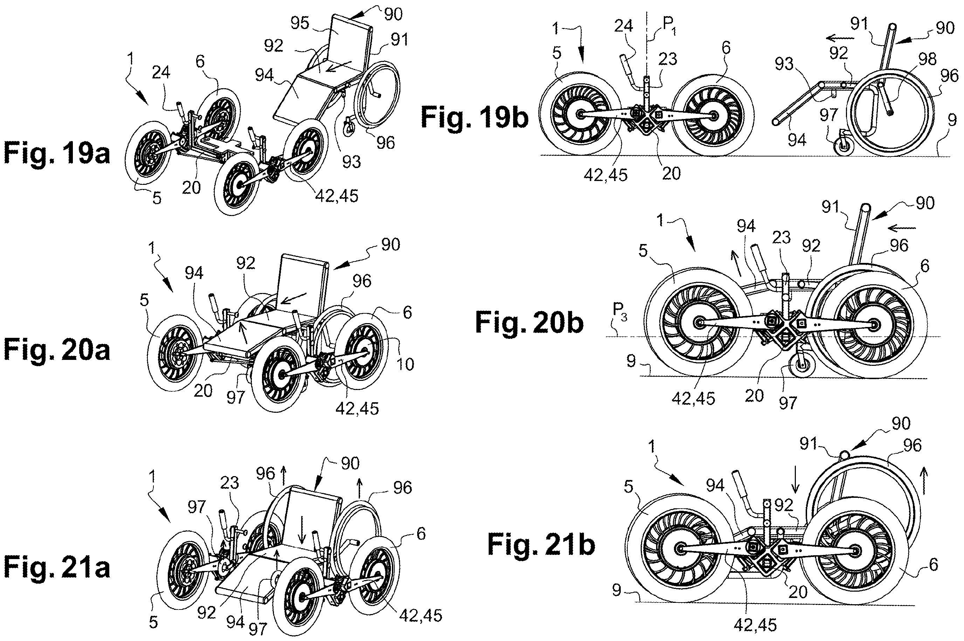

Lors d'une première étape, illustrée sur les figures 19a et 19b, le fauteuil 90 est approché du véhicule 1 depuis l'arrière, par déplacement longitudinal vers l'avant.

Puis l'assise 92 est engagée entre les trains roulants 4 et passe au-dessus de ladite traverse 20, tandis que les roulettes 97 passent sous ladite traverse 20. Ce mouvement nécessite de relever les jambes de l'occupant du fauteuil 90. Pour ce faire, on peut relever à l'horizontale la paroi 94, lorsque celle-ci est prévue (figures 20a et 20b).

Les roues arrière 96 et les roulettes avant 97 sont ensuite déplacées vers le haut par rapport à l'assise 92 du fauteuil 90, grâce au système de liaison 98. L'assise 92 peut alors être déplacée vers le bas et être fixée au châssis 2 du véhicule 1 par la coopération entre les premiers et les seconds moyens de connexion amovible 93. A titre d'exemple, les seconds moyens de connexion amovible 93 peuvent être constitués de broches verticales à extrémités coniques venant dans les trous d'une platine du châssis - ces trous constituant les premiers moyens de connexion amovible - lorsque le conducteur abaisse l'assise 92du fauteuil 90.

L'assise 92 du siège 91 du fauteuil 90 est ainsi connectée au châssis 2, avec possibilité de rotation du siège 91 par rapport au châssis 2 autour de l'axe longitudinal A3, via le premier dispositif d'assemblage 30. La conduite du véhicule 1 est identique à la configuration standard avec un siège 3 prévu sur le châssis 2.

Les roues arrière 96 et les roulettes avant 97 ne sont alors plus en contact avec le sol 9, et sont de préférence relevées pour assurer une garde au sol suffisante (figures 21a et 21b).

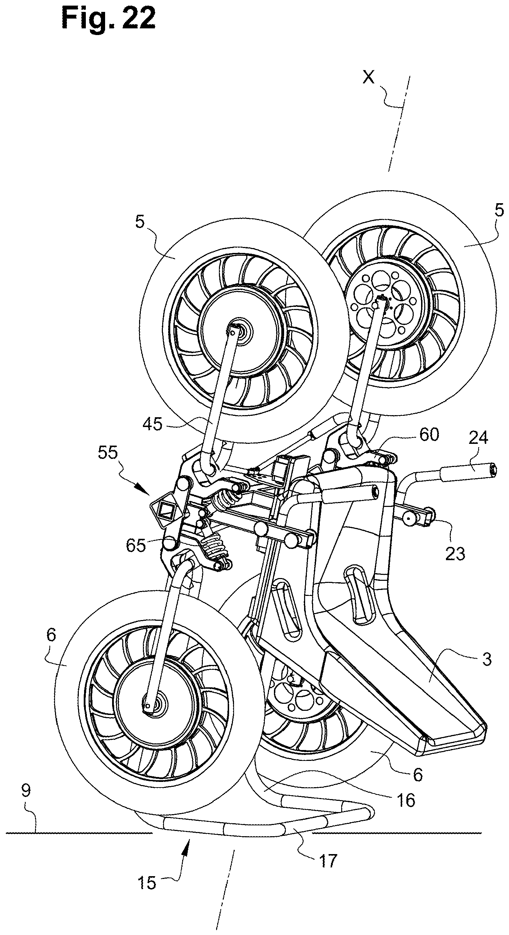

La figure 22 illustre le véhicule 1 équipé d'un support 15, offrant une possibilité de stationnement en position redressée pour réduire l'emprise au sol. Cette fonctionnalité peut être très utile pour un usage urbain.

Le support 15 est solidaire du châssis 2, et disposé à l'arrière des roues arrière 6. Le support 15 comporte par exemple deux barres longitudinales latérales 16 dont l'extrémité avant est fixée à la traverse 20, et qui s'étendent du côté intérieur et à proximité de chaque roue arrière 6. L'extrémité arrière des barres 16 peut être reliée par une barre en U 17 dont la base est située en partie supérieure. La barre en U 17 peut être située dans un plan sensiblement transversal et vertical - en position neutre - ou incliné vers l'avant, du bas vers le haut.

Comme on le voit sur la figure 22, le support 15 est configuré pour permettre un maintien du véhicule 1 en position de stationnement, dans laquelle le véhicule 1 est en appui sur le support 15, le support 15 agissant comme une béquille de maintien assurant une sécurité satisfaisante. De préférence, les roues arrière 6 ne sont pas en contact avec le sol 9, évitant ainsi au véhicule 1 de rouler.

Dans cette position de stationnement, la direction longitudinale X est orientée sensiblement verticalement ou, selon l'inclinaison de la barre en U17, inclinée par rapport à la perpendiculaire au sol d'un angle inférieur à 20°.

Cette opération de redressement est rendue possible par le fait que le véhicule 1 est très léger, comme déjà expliqué.

De façon synthétique, le véhicule selon l'invention est d'une structure simple le rendant robuste, compact et léger. Il offre une conduite confortable, ludique, et sûre. Il s'agit d'un véhicule polyvalent, à vocation urbaine par sa vitesse (de l'ordre de 25 km/h), mais également capable de franchissements importants en tout-terrain. Un autre avantage significatif est que ce véhicule est accessible à tous publics, y compris aux personnes handicapées.

Il va de soi que l'invention n'est pas limitée aux modes de réalisation décrits ci-dessus à titre d'exemples mais est défini par la portée des revendications annexées.

## Revendications

1. Véhicule (1) comprenant un châssis (2), un siège (3) monté sur le châssis (2), ainsi qu'un train roulant (4) droit et un train roulant (4) gauche, chaque train roulant (4) étant monté sur le châssis (2) et comportant une roue avant (5) et une roue arrière (6), le véhicule (1) définissant une direction longitudinale (X), une direction transversale (Y) et une direction verticale (Z) en position neutre, dans lequel :
- le châssis (2) comporte une traverse (20) située au voisinage d'un plan transversal vertical médian (P2) du véhicule (1) ;
- chaque train roulant (4) comporte, pour chacune des roues avant (5) et arrière (6), au moins un bras (42) qui est agencé sensiblement parallèlement au plan moyen de la roue, chaque bras (42) ayant une extrémité (43) liée à l'axe de la roue (5, 6) et une autre extrémité (44) montée sur une pièce de liaison (50) de façon pivotante autour d'un axe de pivotement (A) qui, en position neutre, est disposé sensiblement dans le plan de la roue (5, 6) et est vertical ou incliné vers le bas en direction de la roue (5, 6), la pièce de liaison (50) étant montée sur la traverse (20) du châssis (2) ;
- le siège (3) est monté sur le châssis (2) par un premier dispositif d'assemblage (30) configuré pour permettre la rotation du siège (3) par rapport au châssis (2) autour d'un axe longitudinal (A3) ;
- le véhicule (1) comprend quatre organes de couplage (70), chaque organe de couplage (70) reliant le siège (3) et l'un des bras (42) lié à l'axe d'une roue (5, 6) ;
le véhicule (1) étant dépourvu d'essieux ;
**caractérisé en ce que** le premier dispositif d'assemblage (30) est configuré pour solliciter le siège (3) de façon élastique vers la position neutre,
et **en ce que** le véhicule (1) est configuré pour que la rotation du siège (3) par rapport au châssis (2) entraîne, via les quatre organes de couplage (70), le pivotement de chaque roue (5, 6) autour de l'axe de pivotement (A), c'est-à-dire :
- d'une part le braquage de la roue (5, 6) par rapport à un plan longitudinal vertical;
- et d'autre part l'inclinaison du plan moyen de la roue (5, 6) par rapport au plan vertical longitudinal (P4) de la roue (5, 6) en position neutre, vers l'intérieur du virage, si l'axe de pivotement (A) est non vertical en position neutre ;
la direction du véhicule (1) étant commandée par la simple rotation imprimée au siège (3).

2. Véhicule selon la revendication 1, **caractérisé en ce que** la pièce de liaison (50) entre une roue (5, 6) et la traverse (20) du châssis (2) est montée sur la traverse (20) du châssis (2) par un deuxième dispositif d'assemblage (55) configuré pour permettre la rotation de la pièce de liaison (50) par rapport à la traverse (20) du châssis (2) autour d'un axe transversal (A50) et solliciter la pièce de liaison (50) de façon élastique vers la position neutre.

3. Véhicule selon la revendication 1 ou 2, **caractérisé en ce que** le premier et/ou le deuxième dispositif d'assemblage (30, 55) comprend en outre un dispositif amortisseur.

4. Véhicule selon l'une des revendications 1 à 3, **caractérisé en ce que** le châssis (2) comporte en outre un longeron (21) fixé à et au-dessus de la traverse (20), le longeron (21) appartenant au premier dispositif d'assemblage (30) du siège (3) sur le châssis (2), le longeron (21) étant de préférence entièrement logé sous le siège (3).

5. Véhicule selon l'une des revendications 1 à 4, **caractérisé en ce qu'**il comporte en outre un dispositif de suspension (65) associé à chacune des roues (5, 6), chaque dispositif de suspension (65) étant configuré pour permettre le pivotement de la roue (5, 6) concernée autour d'un axe de suspension (A65) sensiblement transversal, en position neutre.

6. Véhicule selon l'une des revendications 1 à 5, **caractérisé en ce qu'**il comporte deux poignées (24) solidaires de la traverse (20) du châssis (2), agencées de part et d'autre du siège (3) et configurées pour pouvoir être saisies par un conducteur installé sur le siège (3).

7. Véhicule selon la revendication 6, **caractérisé en ce que** :
- le véhicule (1) comporte un moteur électrique (10) couplé à chacune des deux roues avant (5) et/ou à chacune des deux roues arrière (6), et une poignée (24) comprend un organe de commande (25) de l'accélération des moteurs (10) ;
- et/ou le véhicule (1) comporte un dispositif de freinage (41) associé au moins à chacune des deux roues avant (5) et/ou arrière (6) et une poignée (24) comprend un organe de commande (26) des dispositifs de freinage (41).

8. Véhicule selon l'une des revendications 1 à 7, **caractérisé en ce qu'**il comporte un corps (75) possédant une paroi frontale (76) et une paroi horizontale (77), monté sur le châssis (2) de façon mobile entre :
- une première position dite d'utilisation, dans laquelle le corps (75) est disposé à l'avant du siège (3) et entre les roues avant (5), de sorte que la paroi frontale (76) forme un pare-chocs et que la paroi horizontale (77) forme un repose-pieds ;
- et une deuxième position dite escamotée, dans laquelle le corps (75) est disposé au-dessus du siège (3), de façon à libérer l'accès frontal au siège (3).

9. Véhicule selon l'une des revendications 1 à 8, **caractérisé en ce qu'**il comporte un écran de protection (80) monté sur le châssis (2) de façon mobile entre :
- une première position, dans laquelle l'écran (80) est disposé à l'arrière et au-dessus du siège (3) et forme une protection contre le soleil ou la pluie ;
- et une deuxième position, dans laquelle l'écran (80) est disposé à l'avant et au-dessus du siège (3) et forme un pare-brise.

10. Véhicule selon la revendication 9, **caractérisé en ce que** l'écran de protection (80) est équipé d'un capteur solaire (89) capable de convertir une partie du rayonnement solaire en énergie électrique, l'inclinaison du capteur solaire (89) étant de préférence réglable par rapport à la hauteur du soleil.

11. Véhicule selon l'une des revendications 1 à 10, **caractérisé en ce qu'**il comprend un support (15) solidaire du châssis (2) et disposé à l'arrière des roues arrière (6), ledit support (15) étant configuré pour permettre un maintien du véhicule (1) en position de stationnement, dans laquelle la direction longitudinale (X) est orientée sensiblement verticalement, et le véhicule (1) est en appui sur le support (15).

12. Véhicule selon l'une des revendications 1 à 11, **caractérisé en ce que** le siège (3) est monté sur le châssis (2) de façon amovible, et **en ce que** le châssis (2) comporte des premiers moyens de connexion amovible d'un siège (91) de fauteuil roulant (90).

13. Ensemble comportant d'une part un véhicule (1) selon la revendication 12 et d'autre part un fauteuil roulant (90) qui comprend un siège (91) comportant une assise (92) pourvue de seconds moyens de connexion amovible (93) au châssis (2) du véhicule (1), deux roues arrière (96) et deux roulettes avant (97) disposées sous l'assise (92) et ayant un diamètre inférieur à la distance entre le sol (9) et la traverse (20) du véhicule (1), les roues arrière (96) et les roulettes (97) étant liées à l'assise (92) par un système de liaison (98), l'ensemble étant **caractérisé en ce que** :
- en position d'utilisation du fauteuil (90) seul, l'assise (92) du fauteuil (90) est située à une hauteur plus importante que celle de la traverse (20) du châssis (2) et possède une largeur inférieure à l'écartement entre les trains roulants (4), de sorte que, par déplacement longitudinal du fauteuil (90) vers l'avant, l'assise (92) puisse être engagée entre les trains roulants (4) et passer au-dessus de ladite traverse (20), tandis que les roulettes (97) passent sous ladite traverse (20) ;
- le système de liaison (98) est configuré pour permettre aux roues (96) et aux roulettes (97) d'être déplacées vers le haut par rapport à l'assise (92) du fauteuil (90), de sorte que l'assise (92) puisse être déplacée vers le bas et fixée au châssis (2) du véhicule (1) par la coopération entre les premiers et les seconds moyens de connexion amovible (93), les roues (96) et les roulettes (97) n'étant alors pas en contact avec le sol (9).

## Patentansprüche

1. Fahrzeug (1), ein Fahrgestell (2), einen auf dem Fahrgestell (2) montierten Sitz (3) sowie ein rechtes Fahrwerk (4) und ein linkes Fahrwerk (4) umfassend, wobei jedes Fahrwerk (4) auf dem Fahrgestell (2) montiert ist und ein Vorderrad (5) und ein Hinterrad (6) enthält, wobei das Fahrzeug (1) eine Längsrichtung (X), eine Querrichtung (Y) und eine vertikale Richtung (Z) in neutraler Position definiert, wobei:
- das Fahrgestell (2) einen Querträger (20) enthält, der sich in der Nähe einer querlaufenden Vertikalmittelebene (P2) des Fahrzeugs (1) befindet;
- jedes Fahrwerk (4) für jedes der Vorder- (5) und Hinterräder (6) mindestens einen Arm (42) enthält, der im Wesentlichen parallel zur mittleren Ebene des Rades eingerichtet ist, wobei jeder Arm (42) ein Ende (43) aufweist, das mit der Achse des Rades (5, 6) verbunden ist, und ein anderes Ende (44), das an einem Verbindungsstück (50) schwenkbar um eine Schwenkachse (A) montiert ist, die, in neutraler Position, im Wesentlichen in der Ebene des Rades (5, 6) angeordnet ist, und vertikal ist oder geneigt nach unten in Richtung des Rades (5, 6), wobei das Verbindungsstück (50) am Querträger (20) des Fahrgestells (2) montiert ist;
- der Sitz (3) am Fahrgestell (2) durch eine erste Zusammenbauvorrichtung (30) montiert ist, die konfiguriert ist, um die Rotation des Sitzes (3) relativ zum Fahrgestell (2) um eine Längsachse (A3) zu ermöglichen;
- das Fahrzeug (1) vier Kupplungselemente (70) umfasst, wobei jedes Kupplungselement (70) den Sitz (3) an einen der Arme (42) anschließt, der mit der Achse eines Rades (5, 6) verbunden ist;
- das Fahrzeug (1) keine Radsatzwellen aufweist;
**dadurch gekennzeichnet, dass** die erste Zusammenbauvorrichtung (30) konfiguriert ist, um den Sitz (3) elastisch in Richtung der neutralen Position zu belasten,
und dass das Fahrzeug (1) so konfiguriert ist, dass die Rotation des Sitzes (3) relativ zum Fahrgestell (2), über die vier Kupplungselemente (70), das Schwenken jedes Rades (5, 6) um die Schwenkachse (A) bewirkt, das bedeutet:
- einerseits den Einschlag des Rades (5, 6) relativ zu einer vertikalen Längsebene;
- und andererseits die Neigung der mittleren Ebene des Rades (5, 6) relativ zur längslaufenden Vertikalebene (P4) des Rades (5, 6), in neutraler Position, in Richtung der Kurveninnenseite, wenn die Schwenkachse (A) in neutraler Position nicht vertikal ist,
wobei die Richtung des Fahrzeugs (1) durch die schlichte Rotation gesteuert wird, die auf den Sitz (3) ausgeübt wird.

2. Fahrzeug nach Anspruch 1, **dadurch gekennzeichnet, dass** das Verbindungsstück (50) zwischen einem Rad (5, 6) und dem Querträger (20) des Fahrgestells (2) am Querträger (20) des Fahrgestells (2) durch eine zweite Zusammenbauvorrichtung (55) montiert ist, die konfiguriert ist, um die Rotation des Verbindungsstücks (50) relativ zum Querträger (20) des Fahrgestells (2) um eine Querachse (A50) zu ermöglichen, und das Verbindungsstück (50) elastisch in Richtung der neutralen Position zu belasten.

3. Fahrzeug nach Anspruch 1 oder 2, **dadurch gekennzeichnet, dass** die erste und/oder zweite Zusammenbauvorrichtung (30, 55) ferner eine Dämpfervorrichtung umfasst.

4. Fahrzeug nach einem der Ansprüche 1 bis 3, **dadurch gekennzeichnet, dass** das Fahrgestell (2) ferner einen Holm (21) enthält, der an und über dem Querträger (20) befestigt ist, wobei der Holm (21) zur ersten Zusammenbauvorrichtung (30) des Sitzes (3) am Fahrgestell (2) gehört, wobei der Holm (21) vorzugsweise vollständig unter dem Sitz (3) untergebracht ist.

5. Fahrzeug nach einem der Ansprüche 1 bis 4, **dadurch gekennzeichnet, dass** es ferner eine Aufhängevorrichtung (65) enthält, die mit jedem der Räder (5, 6) zusammenhängend ist, wobei jede Aufhängevorrichtung (65) konfiguriert ist, um das Schwenken des betreffenden Rades (5, 6) um eine im Wesentlichen quer verlaufende Aufhängeachse (A65) zu ermöglichen, in neutraler Position.

6. Fahrzeug nach einem der Ansprüche 1 bis 5, **dadurch gekennzeichnet, dass** es zwei Griffe (24) enthält, die mit dem Querträger (20) des Fahrgestells (2) fest verbunden sind, und auf beiden Seiten des Sitzes (3) eingerichtet sind, und konfiguriert sind, um von einem Fahrer ergriffen zu werden, der auf dem Sitz (3) installiert ist.

7. Fahrzeug nach Anspruch 6, **dadurch gekennzeichnet, dass**:
- das Fahrzeug (1) einen Elektromotor (10) enthält, der mit jedem der zwei Vorderrädern (5) und/oder mit jedem der zwei Hinterrädern (6) gekoppelt ist, und einen Griff (24), der ein Steuerelement (25) für die Beschleunigung der Motoren (10) umfasst;
- und/oder das Fahrzeug (1) eine Bremsvorrichtung (41) enthält, die mindestens mit jedem der zwei Vorder- (5) und/oder Hinterrädern (6) zusammenhängend ist, und wobei ein Griff (24) ein Steuerelement (26) der Bremsvorrichtungen (41) umfasst.

8. Fahrzeug nach einem der Ansprüche 1 bis 7, **dadurch gekennzeichnet, dass** es einen Körper (75) enthält, der über eine vordere Wand (76) und eine horizontale Wand (77) verfügt, und beweglich am Fahrgestell (2) montiert ist zwischen:
- einer ersten Position, des Gebrauchs genannt, in der der Körper (75) vor dem Sitz (3) und zwischen den Vorderrädern (5) angeordnet ist, so dass die vordere Wand (76) einen Stoßfänger bildet und die horizontale Wand (77) eine Fußstütze bildet;
- und einer zweiten Position, des Rückzugs genannt, in der der Körper (75) oberhalb des Sitzes (3) angeordnet ist, um den frontalen Zugang zum Sitz (3) freizugeben.

9. Fahrzeug nach einem der Ansprüche 1 bis 8, **dadurch gekennzeichnet, dass** es eine Schutzblende (80) enthält, die beweglich am Fahrgestell (2) montiert ist zwischen:
- einer ersten Position, in der die Blende (80) hinter und oberhalb des Sitzes (3) angeordnet ist und einen Sonnen- oder Regenschutz bildet;
- und einer zweiten Position, in der die Blende (80) vor und oberhalb des Sitzes (3) angeordnet ist und eine Windschutzscheibe bildet.

10. Fahrzeug nach Anspruch 9, **dadurch gekennzeichnet, dass** die Schutzblende (80) mit einem Sonnenkollektor (89) ausgestattet ist, der in der Lage ist, einen Teil der Sonnenstrahlung in elektrische Energie umzuwandeln, wobei die Neigung des Sonnenkollektors (89) vorzugsweise relativ zur Sonnenhöhe einstellbar ist.

11. Fahrzeug nach einem der Ansprüche 1 bis 10, **dadurch gekennzeichnet, dass** es einen Ständer (15) umfasst, der mit dem Fahrgestell (2) fest verbunden ist und hinter den Hinterrädern (6) angeordnet ist, wobei der Ständer (15) konfiguriert ist, um ein Halten des Fahrzeugs (1) in einer Parkposition zu ermöglichen, in der die Längsrichtung (X) im Wesentlichen vertikal ausgerichtet ist, und das Fahrzeug (1) auf dem Ständer (15) abstützt ist.

12. Fahrzeug nach einem der Ansprüche 1 bis 11, **dadurch gekennzeichnet, dass** der Sitz (3) abnehmbar am Fahrgestell (2) montiert ist und dass das Fahrgestell (2) erste Mittel zum abnehmbaren Verbinden eines Sitzes (91) eines Rollstuhls (90) enthält.

13. Einheit, die einerseits ein Fahrzeug (1) nach Anspruch 12 enthält und andererseits einen Rollstuhl (90), der einen Sitz (91) umfasst, der eine Sitzfläche (92) enthält, die mit zweiten Mitteln zur abnehmbaren Verbindung (93) zum Fahrgestell (2) des Fahrzeugs (1) ausgestattet ist, zwei Hinterräder (96) und zwei vordere Rollen (97), die unter der Sitzfläche (92) angeordnet sind und einen Durchmesser haben, der kleiner ist als der Abstand vom Boden (9) zum Querträger (20) des Fahrzeugs (1), wobei die Hinterräder (96) und die Rollen (97) durch ein Verbindungssystem (98) mit der Sitzfläche (92) verbunden sind, wobei die Einheit **dadurch gekennzeichnet ist, dass**:
- nur in der Position des Gebrauchs des Stuhls (90), sich die Sitzfläche (92) des Stuhls (90) in einer größeren Höhe als der Querträger (20) des Fahrgestells (2) befindet, und über eine Breite verfügt, die kleiner ist als die Distanz zwischen den Fahrwerken (4), so dass, durch Längsverschiebung des Stuhls (90) nach vorne, die Sitzfläche (92) zwischen den Fahrwerken (4) in Eingriff kommen kann und über den Querträger (20) laufen kann, während die Rollen (97) unter dem Querträger (20) laufen;
- das Verbindungssystem (98) konfiguriert ist, um den Rädern (96) und Rollen (97) zu ermöglichen relativ zur Sitzfläche (92) des Stuhls (90) nach oben verschoben zu werden, so dass die Sitzfläche (92) durch das Zusammenwirken zwischen den ersten und zweiten Mitteln zur abnehmbaren Verbindung (93) nach unten verschoben und am Fahrgestell (2) des Fahrzeugs (1) befestigt werden kann, wobei die Räder (96) und Rollen (97) dann nicht mit dem Boden (9) in Kontakt stehen.

## Claims

1. A vehicle (1) comprising a chassis (2), a seat (3) mounted on the chassis (2), as well as a right running gear (4) and a left running gear (4), each running gear (4) being mounted on the chassis (2) and including a front wheel (5) and a rear wheel (6), the vehicle (1) defining a longitudinal direction (X), a transverse direction (Y) and a vertical direction (Z) in the neutral position, wherein:
- the chassis (2) includes a cross member (20) located in the vicinity of a median vertical transverse plane (P2) of the vehicle (1);
- each running gear (4) includes, for each of the front (5) and rear (6) wheels, at least one arm (42) which is arranged substantially parallel to the mean plane of the wheel, each arm (42) having one end (43) linked to the axis of the wheel (5, 6) and another end (44) mounted on a connecting part (50) in a pivoting manner about a pivot axis (A) which, in the neutral position, is disposed substantially in the plane of the wheel (5, 6) and is vertical or inclined downwards in the direction of the wheel (5, 6), the connecting part (50) being mounted on the cross member (20) of the chassis (2);
- the seat (3) is mounted on the chassis (2) by a first assembly device (30) configured to allow the rotation of the seat (3) relative to the chassis (2) about a longitudinal axis (A3);
- the vehicle (1) comprises four coupling members (70), each coupling member (70) connecting the seat (3) and one of the arms (42) linked to the axis of a wheel (5, 6);
the vehicle (1) being devoid of axles;
**characterized in that** the first assembly device (30) is configured to bias the seat (3) elastically towards the neutral position,
and **in that** the vehicle (1) is configured so that the rotation of the seat (3) relative to the chassis (2) causes, via the four coupling members (70), the pivoting of each wheel (5, 6) about the pivot axis (A), that is to say:
- on the one hand the steering of the wheel (5, 6) relative to a vertical longitudinal plane;
- and on the other hand the inclination of the mean plane of the wheel (5, 6) relative to the longitudinal vertical plane (P4) of the wheel (5, 6) in the neutral position, inwards the turning, if the pivot axis (A) is not vertical in the neutral position;
the direction of the vehicle (1) being controlled by the simple rotation imparted to the seat (3).

2. The vehicle according to claim 1, **characterized in that** the connecting part (50) between a wheel (5, 6) and the cross member (20) of the chassis (2) is mounted on the cross member (20) of the chassis (2) by a second assembly device (55) configured to allow the rotation of the connecting part (50) relative to the cross member (20) of the chassis (2) about a transverse axis (A50) and to bias the connecting part (50) elastically towards the neutral position.

3. The vehicle according to claim 1 or 2, **characterized in that** the first and/or the second assembly device (30, 55) further comprises a damper device.

4. The vehicle according to any of claims 1 to 3, **characterized in that** the chassis (2) further includes a longitudinal member (21) fastened to and above the cross member (20), the longitudinal member (21) belonging to the first assembly device (30) of the seat (3) on the chassis (2), the longitudinal member (21) preferably being entirely housed under the seat (3).

5. The vehicle according to any of claims 1 to 4, **characterized in that** it further includes a suspension device (65) associated with each of the wheels (5, 6), each suspension device (65) being configured to allow the concerned wheel (5, 6) to pivot about a substantially transverse suspension axis (A65), in the neutral position.

6. The vehicle according to any of claims 1 to 5, **characterized in that** it includes two handles (24) secured to the cross member (20) of the chassis (2), arranged on either side of the seat (3) and configured to be able to be grasped by a driver installed on the seat (3).

7. The vehicle according to claim 6, **characterized in that**:
- the vehicle (1) includes an electric motor (10) coupled to each of the two front wheels (5) and/or to each of the two rear wheels (6), and a handle (24) comprises a member (25) for controlling the acceleration of the motors (10);
- and/or the vehicle (1) includes a braking device (41) associated with at least each of the two front (5) and/or rear (6) wheels and a handle (24) comprises a member (26) for controlling the braking devices (41).

8. The vehicle according to any of claims 1 to 7, **characterized in that** it includes a body (75) having a front wall (76) and a horizontal wall (77), mounted on the chassis (2) in a movable manner between:
- a first so-called use position, in which the body (75) is disposed in front of the seat (3) and between the front wheels (5), so that the front wall (76) forms a bumper and that the horizontal wall (77) forms a footrest;
- and a second so-called retracted position, in which the body (75) is disposed above the seat (3), so as to free frontal access to the seat (3).

9. The vehicle according to any of claims 1 to 8, **characterized in that** it includes a protective screen (80) mounted on the chassis (2) in a movable manner between:
- a first position, in which the screen (80) is disposed behind and above the seat (3) and forms protection against the sun or rain;
- and a second position, in which the screen (80) is disposed in front and above the seat (3) and forms a windshield.

10. The vehicle according to claim 9, **characterized in that** the protective screen (80) is equipped with a solar sensor (89) capable of converting part of the solar radiation into electrical energy, the inclination of the solar sensor (89) being preferably adjustable relative to the height of the sun.

11. The vehicle according to any of claims 1 to 10, **characterized in that** it comprises a support (15) secured to the chassis (2) and disposed at the rear of the rear wheels (6), said support (15) being configured to allow the vehicle (1) to be maintained in the parking position, in which the longitudinal direction (X) is oriented substantially vertically, and the vehicle (1) bears on the support (15).

12. The vehicle according to any of claims 1 to 11, **characterized in that** the seat (3) is mounted on the chassis (2) in a removable manner, and **in that** the chassis (2) includes first means for removably connecting a seat (91) of a wheelchair (90).

13. An assembly including on the one hand a vehicle (1) according to claim 12 and on the other hand a wheelchair (90) which comprises a seat (91) including a seating part (92) provided with second means (93) for removably connecting to the chassis (2) of the vehicle (1), two rear wheels (96) and two front casters (97) disposed under the seating part (92) and having a diameter less than the distance between the ground (9) and the cross member (20) of the vehicle (1), the rear wheels (96) and the casters (97) being linked to the seating part (92) by a connection system (98), the assembly being **characterized in that**:
- in the position of using the chair (90) alone, the seating part (92) of the chair (90) is located at a greater height than that of the cross member (20) of the chassis (2) and has a width less than the spacing between the running gear (4), so that, by longitudinal movement of the chair (90) forwards, the seating part (92) may be engaged between the running gear (4) and pass above said cross member (20), while the casters (97) pass under said cross member (20);
- the connection system (98) is configured to allow the wheels (96) and the casters (97) to be moved upwards relative to the seating part (92) of the chair (90), so that the seating part (92) may be moved downwards and fastened to the chassis (2) of the vehicle (1) by the cooperation between the first and second removable connection means (93), the wheels (96) and the casters (97) then not being in contact with the ground (9).
